# DEMANDE DE BREVET EUROPEEN

(11) **EP 4 752 045 A1**
(43) Date de publication de la demande: **03.06.2026**
(21) Numéro de dépôt: 25218885.9
(22) Date de dépôt: 26.11.2025
(51) Int. Cl.: B64C 1/10

(54) **CLOISON DE PRESSURISATION FLEXIBLE POUR UN AERONEF**

(30) Priorité: 29.11.2024 FR 2413232
(71) Demandeur: AIRBUS OPERATIONS (S.A.S.), 31060 Toulouse (FR)
(72) Inventeur: LIEVEN, Patrick, 31060 Toulouse (FR); MERTES, Anthony, 31060 Toulouse (FR)
(74) Mandataire: BCF Global

(57) **Abrégé**

L'invention concerne une cloison de pressurisation pour un aéronef, comprenant une membrane (2) présentant une surface principale, plane, et au moins une articulation (3) pour connecter la membrane (2) au fuselage de l'aéronef.

## Description

### Domaine technique

La présente invention se rapporte à une cloison de pressurisation pour un aéronef.

### Technique antérieure

Dans un effort de réduction de l'impact climatique dû à l'aviation, la Titulaire a développé des projets d'aéronefs dont les moteurs fonctionnent avec une propulsion à hydrogène. Ce type de propulsion nécessite un équipement spécifique, notamment un ou plusieurs réservoirs contenant de l'hydrogène, de préférence sous forme liquide et à température cryogénique, afin d'augmenter sa densité et de réduire le volume nécessaire à son stockage. Les réservoirs d'hydrogène sont de préférence disposés dans l'arrière de l'aéronef, derrière la cloison de fin de pressurisation. La cloison de fin de pressurisation, généralement en forme de dôme, fait barrière entre la cabine, pressurisée en vol, et l'arrière de l'aéronef, non pressurisé.

Néanmoins, les réservoirs d'hydrogène sont encombrants et décalent le centre de gravité de l'aéronef vers l'arrière, ce qui impacte la conception de la structure même de l'aéronef.

Le but de l'invention est de remédier au moins partiellement à cet inconvénient.

### Résumé

A cet effet, il est proposé une cloison de pressurisation pour un aéronef, comprenant une membrane présentant une surface principale, plane, et au moins une articulation pour connecter la membrane au fuselage de l'aéronef.

La cloison selon la présente invention assure un gain de place par sa forme plane, qui permet également de rapprocher les réservoirs d'hydrogène du centre de l'aéronef. La cloison selon l'invention présente un comportement optimisé en cas de déformation, grâce à l'articulation qui évite l'apparition d'un moment au niveau de la fixation de la membrane au fuselage de l'aéronef.

Selon un autre aspect, ladite au moins une articulation est un pivot.

Selon un autre aspect, la cloison comprend un liner flexible solidaire de ladite au moins une articulation et s'étendant entre la membrane et ladite au moins une articulation.

Selon un autre aspect, la membrane présente un contour circulaire, la cloison comprenant au moins deux articulations réparties régulièrement autour dudit contour circulaire.

Selon un autre aspect, la cloison comprend huit articulations réparties régulièrement autour dudit contour circulaire.

Selon un autre aspect, la cloison comprend au moins un renfort radial.

Selon un autre aspect, la cloison comprend au moins un renfort radial associé à chaque articulation.

Selon un autre aspect, chaque renfort radial est une barre métallique ou composite.

Selon un autre aspect, la membrane comprend un empilement de couches comprenant au moins une couche en carton présentant un motif en nid d'abeille et/ou en mousse et au moins une couche en matériau composite.

Selon un autre aspect, la cloison comprend au moins une pince de maintien du liner disposée entre l'articulation et la membrane.

Selon un autre aspect, l'articulation comprend une partie mobile dont un axe, en position de repos, est dans un plan de la surface principale de la membrane.

Selon un autre aspect, la cloison conformée pour être positionnée radialement en liaison pivot avec un fuselage de l'aéronef.

L'invention a également pour objet un aéronef, comprenant une cloison de pressurisation telle que décrite précédemment ladite au moins une articulation étant fixée au fuselage de l'aéronef.

### Brève description des dessins

D'autres caractéristiques, détails et avantages apparaîtront à la lecture de la description détaillée ci-après, et à l'analyse des dessins annexés, sur lesquels :
**Fig. 1**

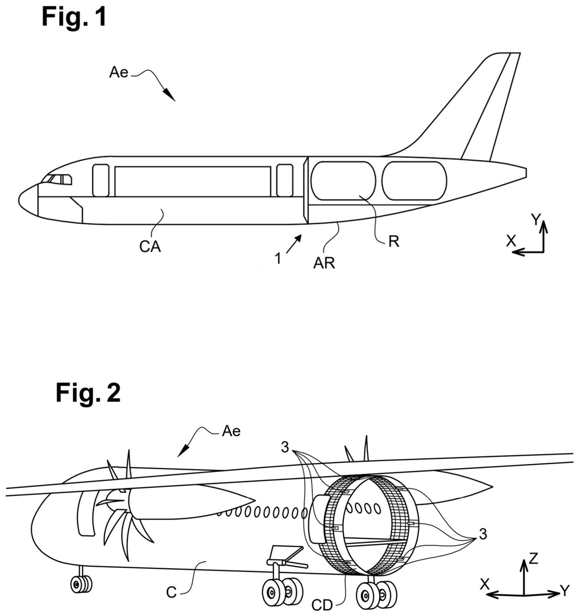

   [Fig. 1] est une vue schématique de côté d'un aéronef dont on voit par transparence l'emplacement pour une cloison de pressurisation selon la présente invention.
**Fig. 2**
   [Fig. 2] est une vue schématique en perspective arrière d'un fuselage de l'aéronef de la figure 1 ouvert sur l'emplacement destiné à recevoir la cloison de pressurisation selon la présente invention.
**Fig. 3**

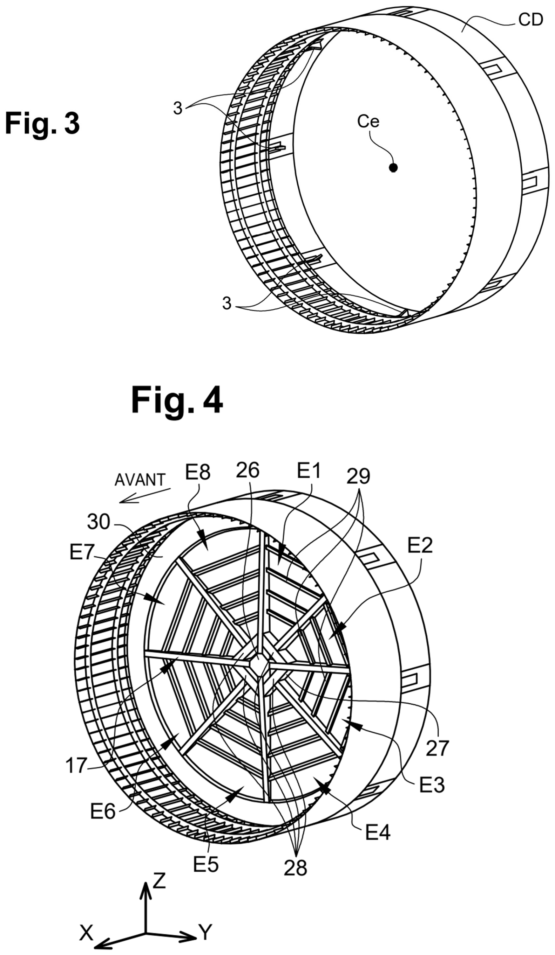

   [Fig. 3] est une vue schématique en perspective avant d'un détail de la figure 2.
**Fig. 4**
   [Fig. 4] est une vue schématique en perspective avant d'une cloison de pressurisation selon un premier mode de réalisation de l'invention.
**Fig. 5**

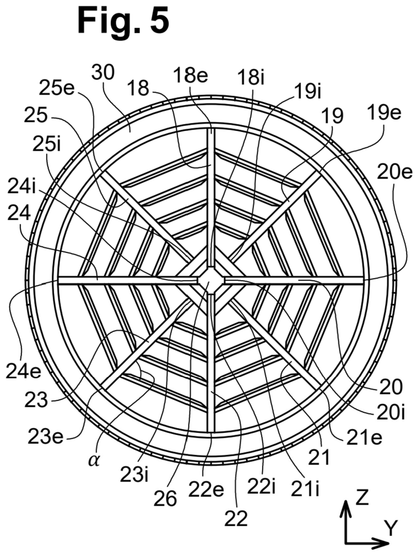

   [Fig. 5] est une vue avant de la cloison de la figure 4.
**Fig. 6**

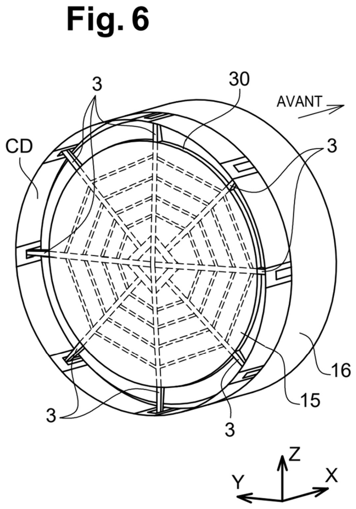

   [Fig. 6] est une vue schématique en perspective arrière de la cloison de la figure 4.
**Fig. 7**

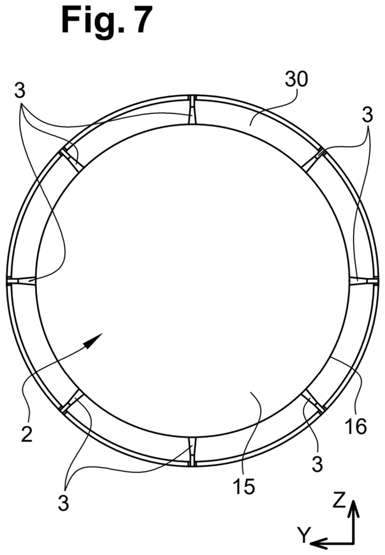

   [Fig. 7] est une vue arrière de la cloison de la figure 4.
**Fig. 8**

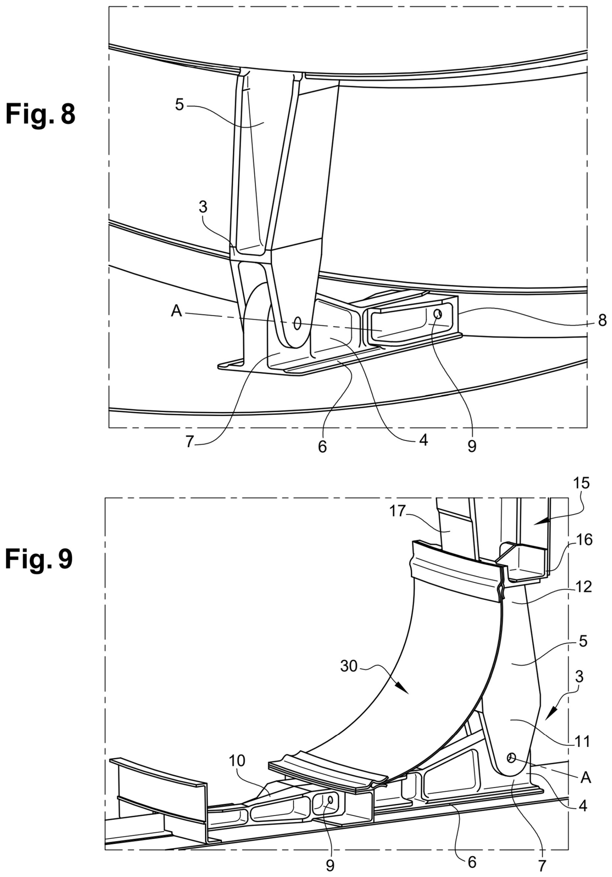

   [Fig. 8] est une vue schématique en perspective d'une articulation de la cloison de pressurisation de la figure 4.
**Fig. 9**
   [Fig. 9] est une vue en perspective de l'articulation de la figure 8 munie d'un liner d'étanchéité.
**Fig. 10**

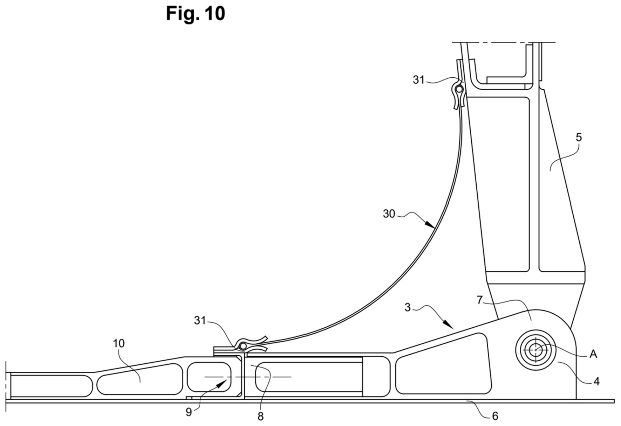

   [Fig. 10] est une vue schématique de côté de l'articulation de la figure 9.
**Fig. 11**

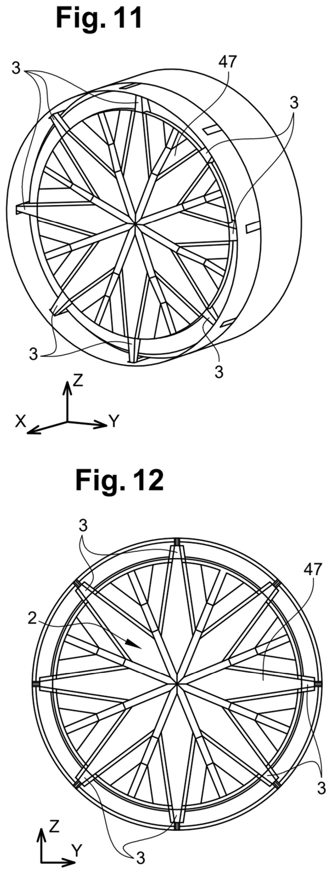

   [Fig. 11] est une vue schématique en perspective avant d'une cloison de pressurisation selon un deuxième mode de réalisation de l'invention.
**Fig. 12**
   [Fig. 12] est une vue avant de la cloison de la figure 11.
**Fig. 13**

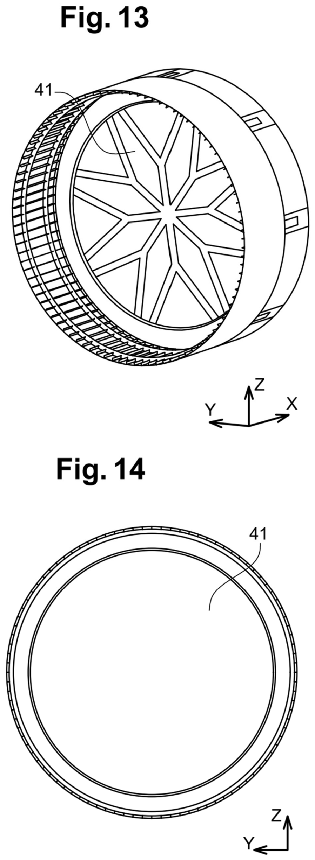

   [Fig. 13] est une vue schématique en perspective arrière de la cloison de la figure 11.
**Fig. 14**
   [Fig. 14] est une vue arrière de la cloison de la figure 11.
**Fig. 15**

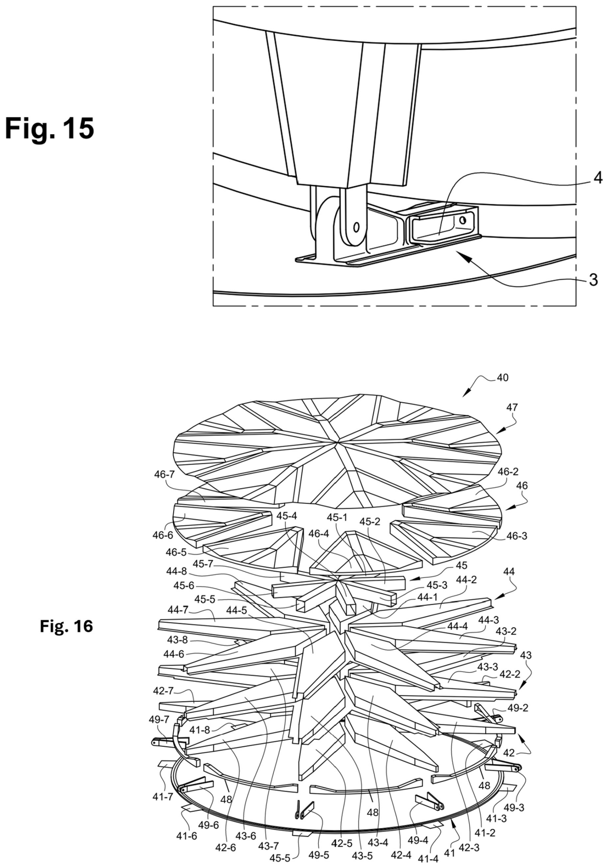

   [Fig. 15] est une vue schématique en perspective d'une articulation de la cloison de pressurisation de la figure 11.
**Fig. 16**
   [Fig. 16] est une vue schématique en perspective éclatée des couches d'une membrane de la cloison de pressurisation de la figure 11.
**Fig. 17**

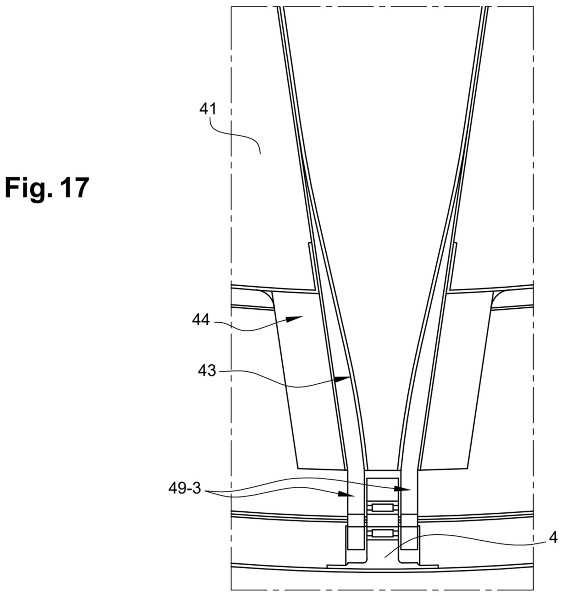

   [Fig. 17] est une vue schématique arrière de l'articulation de la figure 15 solidaire de la membrane de la figure 16.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en oeuvre relativement simplifiées de la présente invention. Comme l'homme du métier le comprend, d'autres mises en oeuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en oeuvre de la présente invention, ainsi que les exemples spécifiques de celle-ci, visent à englober à la fois les équivalents structurels et fonctionnels de celle-ci, qu'ils soient actuellement connus ou développés à l'avenir.

Sur les figures, on a illustré un repère orthonormé (X, Y, Z) pour simplifier la compréhension de la description de la présente invention. La direction Z correspond à une direction verticale (axe de lacet), la direction X correspond à une direction longitudinale de l'aéronef (axe de roulis), et la direction Y correspond à une direction transversale (axe de tangage).

L'invention a pour objet une cloison de pressurisation, référencée 1 sur les figures, pour un aéronef Ae, visible sur les figures 1 et 2. L'aéronef Ae est par exemple à propulsion à hydrogène et comprend au moins un réservoir R.

La cloison de pressurisation 1 fait barrière entre la cabine CA de l'aéronef et une partie arrière AR, dans laquelle est logé chaque réservoir d'hydrogène R. La cabine CA est pressurisée en vol, contrairement à la partie arrière AR.

La cloison de pressurisation 1 comprend une membrane 2 et au moins une articulation 3 et sera décrite selon deux modes de réalisation, en référence respectivement aux figures 4 à 7 et aux figures 11 à 14. Ladite au moins une articulation 3 assure un degré de liberté entre la cloison 1 et le fuselage de l'aéronef Ae, ce qui permet de transmettre les charges selon la direction X depuis la cloison 1 jusqu'au fuselage.

Sur les modes de réalisation illustrés, et de façon non limitative la cloison 1 comprend huit articulations 3 régulièrement espacées. Chaque articulation 3 est par exemple une liaison pivot. La liaison pivot permet de supprimer tout moment entre la cloison et le fuselage, en cas d'efforts de pressurisation contre la cloison 1.

Comme il ressort des figures, chaque articulation 3 est solidaire de la membrane 2 d'une part et d'un cadre CD du fuselage de l'aéronef Ae, d'autre part.

L'articulation 3 comprend une partie fixe 4 destinée à être solidaire du cadre CD et une partie mobile 5 destinée à être solidaire de la membrane 2. La partie mobile 5 peut pivoter autour d'un axe A s'étendant par exemple tangents à la membrane.

La partie fixe 4 comprend un socle 6 qui présente une forme allongée dont une extrémité 7dans sa direction longitudinale est munie de l'axe A et l'autre extrémité 8 dans sa direction longitudinale comprend un orifice 9 de passage d'une vis pour solidariser l'articulation 3 à un élément supplémentaire de connexion 10. L'élément 10 et l'articulation 3 sont vissés l'un à l'autre, une équerre, de profil en C, assurant l'étanchéité de la solidarisation. Le socle 6 est fixé sur le cadre CD.

La partie mobile 5 s'étend entre une extrémité 11 portant l'axe A et une extrémité 12. La membrane 2 s'insère dans un logement de l'extrémité 12, comme il sera détaillé ultérieurement.

Sur les modes de réalisation illustrés, les articulations 3 sont fixées chacune par leur partie fixe 4 sur le cadre CD. Par exemple, les articulations sont espacées régulièrement les unes des autres. Sur les figures, deux articulations voisines forment un angle de 45° avec un centre Ce du cadre CD dans un plan (Y, Z). L'invention n'est bien entendu pas limitée à cette configuration et l'angle entre deux articulations dépend du nombre de barres radiales choisi.

Avantageusement, l'interface formant l'axe A comprend de l'élastomère, ce qui augmente les tolérances.

On décrit maintenant en détail le premier mode de réalisation de l'invention avec un matériau et réalisation métallique et ou composite.

La membrane 2 comprend une peau plane 15 en forme de disque. La peau plane 15 s'étend principalement dans un plan (Y, Z) lorsque la cloison est installée dans l'aéronef Ae, en étant coaxiale du centre Ce du cadre CD. La forme plane, dans le plan (Y, Z) assure un gain de place et permet également de rapprocher les réservoirs d'hydrogène du centre de l'aéronef.

La peau 15 est tendue par solidarisation à chacune des articulations 3.

Sur la figure 9, la cloison de pressurisation 1 comprend également une structure de renfort 17 de la cloison de pressurisation 1.

La structure de renfort 17 est munie d'au moins une barre radiale solidaire de l'une des articulations 3. Par exemple, la structure de renfort comprend huit barres radiales, 18 à 25, chacune des barres 18 à 25 étant solidaire d'une articulation respective 3 par une extrémité dite externe, et référencée respectivement 18e à 25e.

Sur le mode de réalisation illustré, parmi les barres radiales, la structure de renfort comprend quatre barres radiales principales 18, 20, 22 et 24, et quatre barres radiales secondaires 19, 21, 23 et 25. Les barres radiales principales s'étendent jusqu'à un centre 26 de la structure de renfort 17 par une extrémité dite interne, et référencée 18i, 20i, 22i et 24i. Deux barres principales successives forment un angle de 90° avec le centre de la structure de renfort 17.

La structure de renfort 17 comprend également un carré central 27 pourvu de quatre tiges 28 autour du centre 26 de la structure de renfort 17. Chaque tige 28 du carré central 27 est fixée à deux barres radiales principales. Les barres radiales secondaires 19, 21, 23, 25 sont solidaires par leur extrémité interne 19i, 21i, 23i, 25i d'une tige respective 28 du carré central 27, par exemple en son milieu.

La structure de renfort 17 comprend au moins une barre de liaison d'une barre radiale principale à une barre radiale secondaire. Sur le mode de réalisation illustré, la structure de renfort 17 comprend huit ensembles E1 à E8 de quatre barres de liaison 29, les barres de liaison d'un ensemble s'étendant parallèlement les unes aux autres. Chaque ensemble de quatre barres est compris entre deux barres radiales principale et secondaire respectives. Ainsi, chaque barre 29 de l'ensemble E1 s'étend entre la barre radiale principale 18 et la barre radiale secondaire 19, chaque barre 29 de l'ensemble E2 s'étend entre la barre radiale secondaire 19 et la barre radiale principale 20, chaque barre 29 de l'ensemble E3 s'étend entre la barre radiale principale 20 et la barre radiale secondaire 21, chaque barre 29 de l'ensemble E4 s'étend entre la barre radiale secondaire 21 et la barre radiale principale 22, chaque barre 29 de l'ensemble E5 s'étend entre la barre radiale principale 22 et la barre radiale secondaire 23, chaque barre 29 de l'ensemble E6 s'étend entre la barre radiale secondaire 23 et la barre radiale principale 24, chaque barre 29 de l'ensemble E7 s'étend entre la barre radiale principale 24 et la barre radiale secondaire 25, et chaque barre 29 de l'ensemble E8 s'étend entre la barre radiale secondaire 25 et la barre radiale principale 18. Un angle interne α entre une barre radiale et une barre de liaison est compris entre 60° et 85°, par exemple.

La structure de renfort 17 permet d'améliorer le comportement de la cloison de pressurisation 1 en cas de choc, les barres radiales 18 à 25 dans le prolongement des articulations 3 permettant de transmettre la charge sur la structure de renfort, qui absorbe les efforts de pressurisation par déformation. La structure de renfort 17 donne à la cloison de pressurisation la capacité d'introduire uniquement des efforts orientés suivant la direction X dans le cadre CD (i.e., efforts directement introduits dans le sens de la peau, sans moment).

Comme il ressort également des figures, la cloison de pressurisation 1 comprend un revêtement d'étanchéité 30, encore appelé liner d'étanchéité. Le liner 30 est avantageusement réalisé en matériau souple, par exemple en matériau fibré ou tissé enrobé dans un élastomère possédant un jonc aux extrémités. Le liner 30 est disposé dans l'espace entre la membrane 2 et le cadre CD de sorte que la cloison 1 est continue (sans orifice) entre le cadre CD et la membrane 2. Ainsi, la cloison 1 permet de maintenir une différence de pression, en vol, entre la cabine CA pressurisée et l'arrière AR, non pressurisé. On ajoute que le liner autorise le déplacement des ferrures 5 par rapport au cadre CD sans introduction de moment sur la périphérie.

Comme plus particulièrement visible sur les figures 9 et 10, le liner 30 est attaché entre deux pinces, une première pince 31 fixée à l'extrémité mobile 15 de l'articulation 3 et une deuxième pince fixée 32 à l'élément supplémentaire 10 de connexion.

On détaille maintenant le deuxième mode de réalisation avec un matériau et réalisation composite.

Comme visible sur les figures 9 à 17, la membrane 2 comprend une succession 40 de couches empilées, appelée sandwich CFRP (pour carbon fiber reinforced polymer, en anglais, soit polymère renforcé de fibres de carbone en français).

Le sandwich 40 comprend une première couche 41, dite couche de pression, en matériau composite CFRP. La couche de pression 41 présente une forme de disque pourvu d'ergots qui font saillie hors du disque. Sur le mode de réalisation illustré, la couche comprend huit ergots 41-1 à 41-8 régulièrement espacés, formant un angle de 45° avec un centre C de la couche de pression.

Le sandwich 40 comprend au moins une couche 42 en carton en nid d'abeille ou en mousse. La couche 42 présente une forme d'étoile à huit branches 42-1 à 42-8.

Le sandwich 40 comprend une deuxième couche 43 en matériau composite CFRP, en forme d'étoile à huit branches 43-1 à 43-8, et une troisième couche 44 en matériau composite CFRP, en forme d'étoile à huit branches 44-1 à 44-8.

Les couches 41, 42 et 43 sont coaxiales de la couche 41, et leurs branches sont posées respectivement les unes sur les autres.

Le sandwich 40 comprend un centre 45 à huit branches 45-1 à 45-8, chacune des branches étant insérée entre deux branches respectives de l'étoile de la couche 43.

Le sandwich 40 comprend une couche 46 en carton en nid d'abeille ou en mousse. La couche 46 est discontinue et comprend huit secteurs 46-1 à 46-8 complémentaires des branches de la couche 42 de sorte à former ensemble un disque plein.

Le sandwich 40 comprend également une couche 47 en matériau composite CFRP en forme de disque, et nervurée en étoile.

Comme visible sur la figure 16, la cloison 1 comprend aussi huit cerclages 48, en forme d'arc-de-cercle, entre lesquels s'engagent les pointes des étoiles des couches 42, 43 et 44. La cloison 1 comprend également huit inserts 49-1 à 49-8, chaque insert comprenant deux lames en V. Chacun des inserts maintient l'une des branches des étoiles entre ses deux lames, et les ergots 41-1 à 41-8 recouvrent chacun les inserts 49.

Selon ce mode de réalisation, les inserts 49-1 à 49-8 forment les parties mobiles 5 de l'articulation 3. La partie fixe 4 est inchangée par rapport à la partie fixe 4 du premier mode de réalisation.

De même, la cloison 1 selon le deuxième mode de réalisation comprend un liner 30 identique à celui du premier mode de réalisation.

On note que, selon ce deuxième mode de réalisation également, la membrane 2 est plane. Le sandwich 40 s'étend principalement dans un plan (Y, Z) lorsque la cloison est installée dans l'aéronef Ae, en étant coaxiale du centre Ce du cadre CD. La forme plane, dans le plan (Y, Z) assure un gain de place et permet également de rapprocher les réservoirs d'hydrogène du centre de l'aéronef.

Le matériau composite présente un meilleur comportement mécanique en traction (mise en tension des fibres) qu'en compression (il n'y a que la matrice qui réalise la cohérence du matériau). Lors de l'application de la pression sur la cloison plane, une flexion globale de la lentille a lieu avec une zone de sollicitation en compression sur la surface mise en pression et une sollicitation en traction sur la surface non pressurisée (zone arrière de la cloison). Il est donc avantageux de faire travailler la structure composite (poutre) dans la zone non pressurisée avec une sollicitation en traction.

Le sandwich 40 est simple à fabriquer du fait de la présence des couches de mousse ou de carton en motif en nid d'abeille.

Comme il ressort de la description qui précède, la flexibilité de la cloison 1 lui assure de ne pas rompre sous l'effet de la pressurisation, son montage simple optimise la ligne d'assemblage finale, et permet un accès facilité à l'intérieur de la cabine, le liner assure une barrière de pressurisation, et la surface plane réduit l'encombrement et contribue ainsi à la limitation de la longueur de l'aéronef.

Des modifications et des améliorations aux mises en œuvre décrites ci-dessus de la présente invention peuvent apparaître à l'homme du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Cloison de pressurisation pour un aéronef, comprenant une membrane (2) présentant une surface principale, plane, et au moins une articulation (3) pour connecter la membrane (2) au fuselage de l'aéronef.

2. Cloison selon la revendication précédente, dans laquelle ladite au moins une articulation (3) est un pivot.

3. Cloison selon l'une des revendications précédentes, comprenant un liner (30) flexible solidaire de ladite au moins une articulation (3) et s'étendant entre la membrane (2) et ladite au moins une articulation (3).

4. Cloison de pressurisation selon la revendication précédente, dans laquelle la membrane (2) présente un contour circulaire, la cloison (1) comprenant au moins deux articulations réparties régulièrement autour dudit contour circulaire.

5. Cloison selon la revendication précédente, comprenant huit articulations réparties régulièrement autour dudit contour circulaire.

6. Cloison selon l'une des revendications précédentes, comprenant au moins un renfort radial (18, 19, 20, 21, 22, 23, 24, 25).

7. Cloison selon la revendication précédente, comprenant au moins un renfort radial associé à chaque articulation.

8. Cloison selon l'une des revendications 6 ou 7, dans lequel chaque renfort radial est une barre métallique ou composite.

9. Cloison selon l'une des revendications précédentes, dans laquelle la membrane comprend un empilement de couches comprenant au moins une couche en carton présentant un motif en nid d'abeille et/ou en mousse et au moins une couche en matériau composite.

10. Cloison selon l'une des revendications précédentes, comprenant au moins une pince de maintien du liner disposée entre l'articulation (3) et la membrane (2).

11. Cloison selon l'une des revendications précédentes, dans laquelle l'articulation (3) comprend une partie mobile (5) dont un axe, en position de repos, est dans un plan de la surface principale de la membrane (2).

12. Cloison selon l'une des revendications précédentes, conformée pour être positionnée radialement en liaison pivot avec un fuselage de l'aéronef.

13. Aéronef, comprenant une cloison de pressurisation selon l'une des revendications précédentes, ladite au moins une articulation (3) étant fixée au fuselage de l'aéronef.
